# EUROPEAN PATENT APPLICATION

(11) **EP 1 585 256 A2**
(43) Date of publication of application: **12.10.2005**
(21) Application number: 05300269.7
(22) Date of filing: 11.04.2005
(51) Int. Cl.: H04L 12/24

(54) **Highlighted objects window**

(30) Priority: 09.04.2004 US 820827
(71) Applicant: ALCATEL, 75008 Paris (FR)
(72) Inventor: Martineau, Terrence, Ottawa, Ontario K1N 8N9 (CA); Kiesekamp, David, Ottawa, Ontario K2A 2B4 (CA); Proulx, Denis Armand, Kanata, Ontario K2W 1B6 (CA); Shao, Suyan, Ottawa, Ontario K2M 2L8 (CA); Bawa, Satvinder Singh, Ottawa, Ontario K2M 2X8 (CA); Canton, Raymond, Ottawa, Ontario K1L 8L9 (CA)
(74) Representative: Hervouet, Sylvie

(57) **Abstract**

For displaying information on all highlighted objects in a hierarchical chain of objects, a graphical user interface (GUI), identifies an original highlighted object displayed on a window at a selected hierarchically level. The highlighted object(s) subtended by the original object at the hierarchically next lower level is/are identified and selected from an object storage means, etc, until all highlighted objects corresponding to the original object are identified and selected. The selected objects are placed in a list, and the GIU displays the list in a highlighted objects window where the objects are arranged in a specified order. The list comprises a row for each highlighted object, and a plurality of columns, each column for providing a specified attribute of the object. The GUI may then selects order of the objects in the window by sorting the list by any of the columns.

## Description

### Field of the invention

The invention is directed to management of communication networks and in particular to a highlighted object window for a network management graphical user interface.

### Background of the Invention

Due to recent explosive technological development and the ensuing growing size of the communication networks, the network management became a very complex task. Numerous factors contribute to this growing complexity. For example, modern communication networks use heterogeneous equipment provided by different vendors and/or use a multitude of data communication technologies and protocols, a multitude of network management and service provisioning protocols, etc. In addition, the topology of the network is changing at a fast pace. Not only new network elements (NE) are added, removed, moved or replaced with newer versions, but they are also more geographically dispersed. In many cases, the customers wish to divide their network into different regions based on political or business boundaries; quite frequently two or more regions overlap, presenting a challenge given the current engineering limits. All these changes cause significant technological challenges to the nature of network management.

In a network management system, each managed node is defined by a plurality of "variables". A management station or the operator can monitor the nodes by examining (reading) the values of these variables, and can control the nodes by remotely changing (writing) the values of these variables. Network information is usually presented in the form of network maps which show graphic symbols (icons) of the NEs on a video display screen of a video display terminal on a workstation. This is called a graphical user interface, or GUI. Each window of the GUI provides the user with the ability to manipulate the information of interest utilizing a mouse, or the like. This user action causes the GUI to process the request by performing the respective action or displaying a map of another hierarchical level.

It is important that the information displayed by the GUI clearly identifies the network entities for which information is being presented. It is also important for the GUI to provide the user with the ability to select additional information about a particular network entity and to present the information in a clear and well organized display. Finally, displays of network information should be flexible to accommodate differing network configurations and differing network management requirements.

The networks dynamics causes significant technological challenges to the way in which information is presented to a user. As generally the scale of a communications network is too large and too complex to display all objects of the respective network in a single network map window, the network is divided into hierarchical layers of network object groups, which are shown in separate windows, ranging from upper layer maps of hundreds of network nodes, to lower layer maps of network elements at a certain selected node. This same information can also be represented in a complex tree of objects.

As the number of network layers increases, it becomes a time consuming job for the user to search through many windows since this involves clicking symbols in a window to open the respective sub-layer map and then clicking on the respective sub-layer map symbols, etc. The complexity of finding the correct object in a tree view representation is equally high. In many cases, this operation could also fail, as it is not easy to follow correctly the hierarchical layers conducting to the desired end result. In practice, a customer evaluates the efficiency of a GUI in terms of the number of mouse clicks it takes an operator to perform a certain function.

Some network managers (such as Alcatel's 5620 NM) enable customers to highlight objects displayed on a map or a list. The highlighting changes the background color of an object(s), and is used to trace a specific object through a managed system. However, the operator needs to trace an object through different layers of the object hierarchy, so that after performing the highlight function, the operator would still have to navigate through each layer of the hierarchy, one layer at a time.

Although an attempt to drastically reduce the number of hierarchical layers is impractical because it necessitates overall reconfiguration of the network object containment, it is the usual practice to merge two or more windows by transferring symbols from a lower layer to an upper layer. However, deletion and re-registration of the transferred symbols are necessary. In addition, current network display systems do not allow lower layer maps to be displayed within an upper layer window.

There is a need to provide a faster, automated way to obtain information on a highlighted chain of objects in a network.

### Summary of the Invention

It is an object of the present invention to provide a GUI of a communication network with a highlighted objects window that enables fast access through many layers of hierarchical objects of a network.

The invention provides a method of displaying highlighted objects information on a graphical user interface (GUI) comprising: a) highlighting a primary object *O(n)* displayed on a GUI window at a selected hierarchically level (n); b) identifying a highlighted object *O(n-1)* subtended by the primary object at a hierarchically next lower level *(n-1);* c) selecting the highlighted object *O(n-1)* from an object storage means and placing same in a list of highlighted objects; and d) repeating steps b) and c) for all *n* available hierarchical levels until all highlighted objects corresponding to the primary object are identified and placed in said list.

According to a further aspect, the invention further provides a highlighted objects window system for a graphical user interface (GUI) of the type provided with highlighting capabilities and adapted to transmit commands and display information with a view to enable management of a communication network. The system comprises means for identifying all highlighted objects in a highlighted hierarchy corresponding to a primary object highlighted on the GUI; and means for selecting only the highlighted objects from an object storage means and placing the objects in a list, the GUI displaying the list in a highlighted objects window where the highlighted objects are arranged in a specified order.

Still further, the invention provides a method of using a graphical user interface (GUI) of the type provided with highlighting capabilities and adapted to transmit commands and display information with a view to enable management of a communication network, comprising: a) highlighting an original object on a topological map at a selected hierarchically level; b) identifying all highlighted objects corresponding to the original object in all hierarchical levels subtended from the selected hierarchically level; c) selecting all the highlighted objects from an object storage means and placing same in a list in their hierarchical order of identification; and d) displaying the list as a highlighted objects window for obtaining information of interest about the primary object.

Advantageously, use of the highlighted objects window according to the invention, results in important reduction of the amount of time it takes a user to navigate through the chain of hierarchical objects to obtain the relevant information for the managed objects of interest. In other words, the present solution results in a reduced number of "point and click" operations required for obtaining the information of interest.

Still another advantage of the invention resides in the ability of the GUI to display the list of objects in the highlight hierarchy, as well as additional information relevant to each object, such as the object type, status, specification, name, etc.

### Brief Description of the drawings

The foregoing and other objects, features and advantages of the invention will be apparent from the following more particular description of the preferred embodiments, as illustrated in the appended drawings, where:
**Figure 1** shows an example of a network map with a highlighted object;
**Figure 2** shows the highlighted objects window corresponding to the example of Figure 1;
**Figure 3a** is a block diagram of the units that enable generation of the highlighted object window according to the invention; and
**Figure 3b** illustrates how a highlighted objects window list is generated for the example of Figures 1 and 2.

### Detailed Description

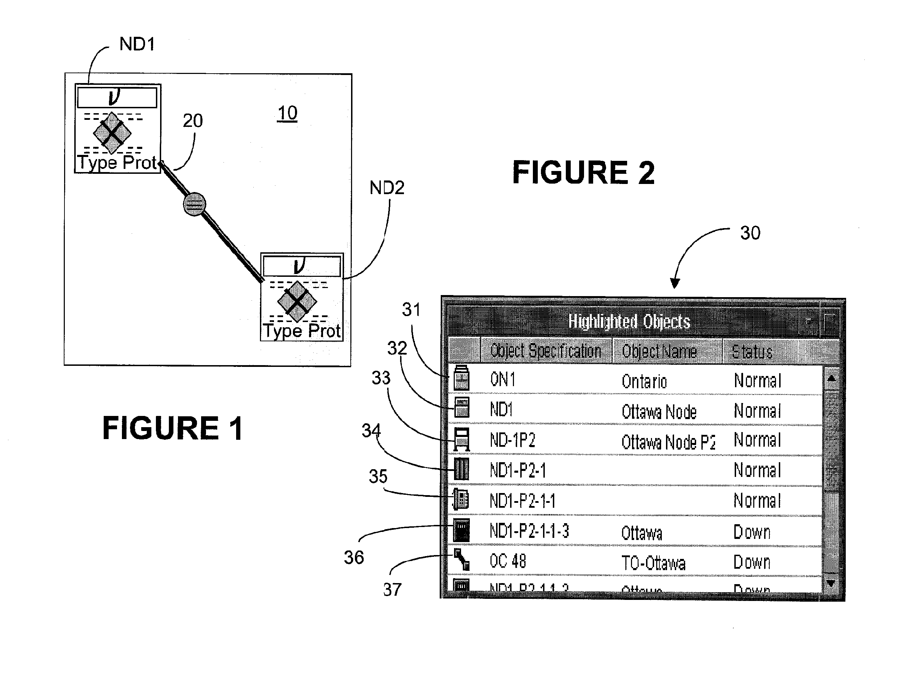

Figure 1 shows an example of a very simple network management map **10**, illustrating a first node **ND1**, housing a first network device, a second node **ND2**, housing a second network device, and a link **20** between the two network devices. Let's assume that the operator wishes to find the ports on the respective devices that are the ends of link **20**. According to the invention, the operator only has to click and highlight link **20** to obtain a list of all objects involved in this connection.

Figure 2 shows a highlighted objects window **30** for the example of Figure 1, which displays a list **30'** of the objects in the highlight heirarchy. This example has been simplified for clarity, as normally a link will have multiple nodes along the way, each with the respecive shelves, slots, cards, ports, etc. Also, each node could be in a group that could be inside another group, inside another group, etc. In this simplified example, window **30** displays a list **30'** showing the group the nodes **ND1** and **ND2** reside in (ON1 in this example), the first node **ND1** and the first network device **ND-1 P2** at node **ND1**. The icons of the respective network elements such as group icon **31**, node icon **32** and network device icon **33** are provided in this example in the first column, and the object specification (node identification) in the second column. The object names are also specified in list **30'**. In this example, the network device **ND-1 P2** resides in an "Ontario Group", at an "Ottawa Node" and is called "Ottawa Node P2".

The next rows show the objects contained in first network device from the top to bottom of the hierarchy. In this example they are shelf **ND1-P2-1** identified by icon **34,** card **ND1-P2-1-1** identified by icon **35** and port **ND1-P2-1-1-3** identified by icon **36.** For a general case, if we denote the hierarchical level of the map of interest (highest level, original map **10**) with *n* and the objects highlighted on this map with *O(n)*, the lower hierarchy objects are denoted with *O(n-1), O(n-2)* and *O(n-3)*, while the respective levels are denoted with *(n-1), (n-2)* and respectively *(n-3)*.

Link **20** is listed next, and is shown using icon **37.** The object specification for this highlighted object indicates the bandwidth of the link "OC48" and the object name gives in this example the direction "Toronto-Ottawa" for the connection over this link.

The next rows (not shown) list the highlighted objects at the second node **ND2**, namely the objects relevant to the connection over link **20** at a second network device **ND-2P2**. These are preferably shown hierarchically from bottom to the top so that the end ports of the link **20** appear in the list above and below the row with the link object. Let's assume that these are port **ND2-P2-1-1-1**, card **ND2-P2-1-2**, shelf **ND2-P2-1**. Toronto end network device **ND2-P2**, and node **ND2** end the list of highlighted objects. If **ND2** belongs to a node group, this is also shown in list **30'**.

Icons **31-37** in the leftmost column quickly identify the object type and status. The colour of the icon indicates its status, therefore locating an alarmed object (e.g. coloured red) in the list is fast.

Additional columns, such as a status column shown in Figure 2, may also be provided depending on the level of information available at the resepective node. Still further, list **30'** may include a column with the count of all the objects in the highlighted hierarchy. As all the managed objects of the hierarchically lower layers are shown on the list, the amount of time it takes a user to navigate through the highlight chain and evaluate each iobject is greatly reduced. In addition, GUI **40** enables the operator to select objects in the list **30'** for viewing further details if necessary and available.

List **30'** can be sorted by the highlight hierarchy or by any of the displayed columns. Window **30** may also be provided with a refresh button (not shown) for enabling the operator to update list **30'** of highlighted objects. Double clicking on a row (line) item in the list provides access to that item.

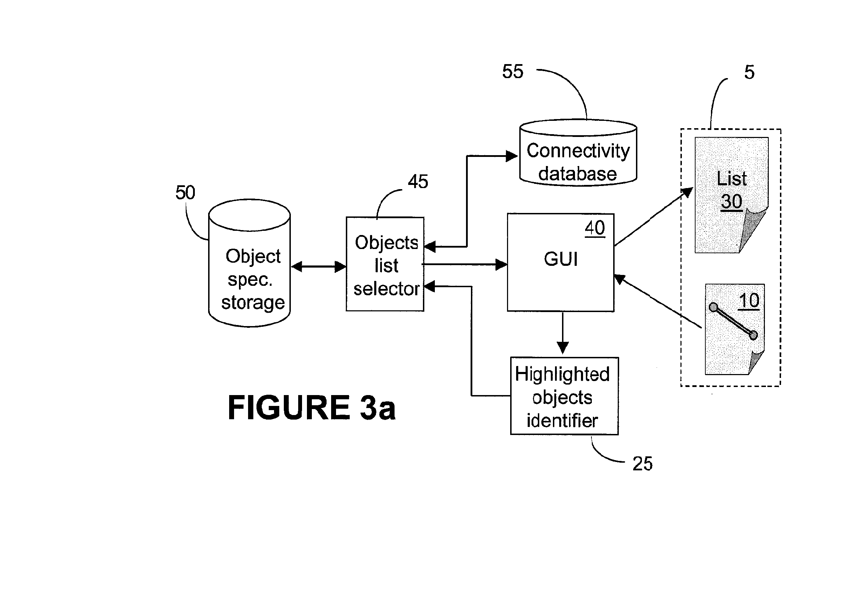

Figure 3a show a high-level block diagram of the main units involved in generating the highlighted objects window according to the invention. It is to be noted that this figure illustrates only the units at the node relevant to this invention, for simplicity. GUI **40** performs conventional user interface functions enabling an operator to monitor and manage the network as well known. For the example used in this specification, GUI **40** provides an operator with a map (or tree) of interest, here map **10**, that is displayed on the screen of workstation **5**, as well known. In addition, GUI **40** enables the operator to highlight objects displayed in the window. In this example, the operator clicks on link **20** to highlight it.

The object highlighted on map **10**, here link **20**, and all objects of interest subtended by this primary highlighted object are identified by identifier block **25** based on the GUI **40** object highlight capability. An object list selector **45** accesses the respective objects and object specification information relevant to all the objects identified by unit **25**. Once the information pertinent to the highlighted objects is collected, GUI **40** generates list **30'** that is displayed on the screen **5**.

It is to be mentioned that the location or the way the object specification information is stored at the node is not relevant to the invention; relevant is only availability of this information. In general, all nodes maintain an object library **50** that comprises data pertinent to all network elements at the respective node, available for use by various network management applications. The place where object data is stored is called herein generically "object specification storage" and is denoted with **50**. The information about the ports used by a specified connection is also available at the node, shown generically in Figure 3a by connectivity database **55**; if this information is not readily available, it may be imported from the routing database.

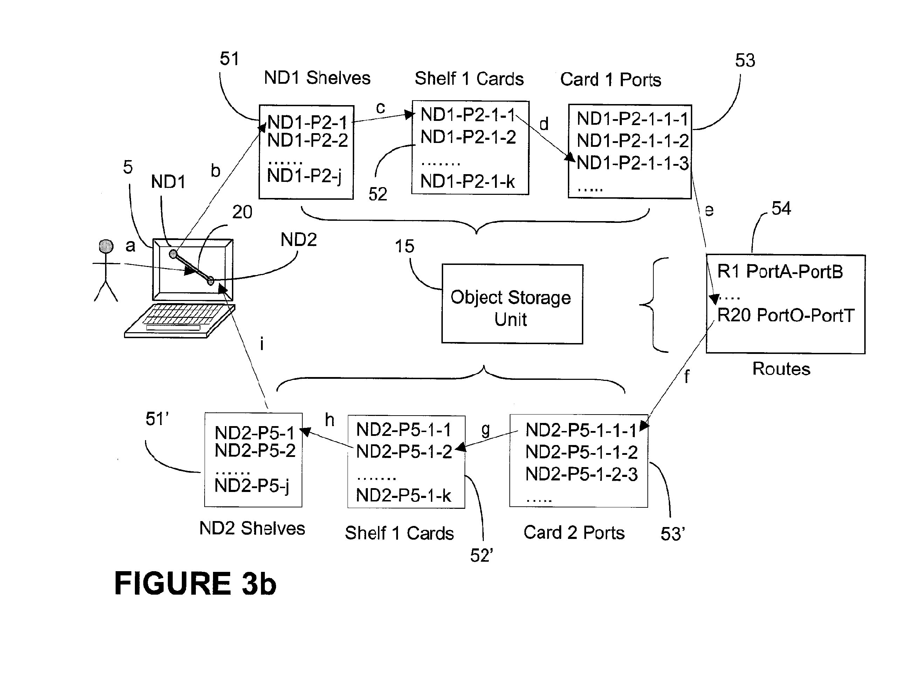

Figure 3b shows how list **30'** of highlighted objects is generated for the example of Figures 1 and 2. It is to be noted that this Figure does not illustrate the objects at the device, node and node group level for simplification. To reiterate, the highlighted objects window **30** provides a list of all the objects that are highlighted in a certain window presented by the GUI, from all the layers of the object hierarchy. The objects are arranged in the list in a specified order, as described above.

First, the operator clicks on link **20** to highlight it, as shown by arrow **a**. The highlighted objects identifier **25** (see Figure 3a) identifies the objects on map **10** pertinent to the operator's request. Then, the object list selector **45** (see Figure 3a) collects hierarchically the highlighted object data from the object storage **15** that includes generically the pertinent databases with the objects specifications and connectivity data, by first locating the highlighted node group, node and network device information and placing it in list **30'** (not shown).

Next, the highlighted shelf **ND1-P2-1** is identified in shelf domain **51** corresponding to the first network device, as shown by arrow **b.** Shelf **ND1-P2-1** is placed in list **30'** together with the relevant information in the respective columns. Then, objects list selector **45** searches domain **52** of cards subtended by this shelf to locate the highlighted card **ND1-P2-1-1,** as shown by arrow **c.** Card **ND1-P2-1-1** and the relevant information are now placed in the next row of the list **30',** and the respective columns of the list are completed with the relevant information. Arrow **d** shows how the port information is located by searching the domain **53** of ports available on card **ND1-P2-1-1.** The object selector identifies highlighted port **ND1-P2-1-1-3** and places it in list **30'.**

**[00031]** Link **20** data is searched next, arrow **e,** in routing domain **54** as it provides the connection between the port-3/card-1/shelf-1 /node-P2/ND1 and port -1 at the Toronto end. This information is also provided to the GUI for insertion in list 30'.

[00032] Next, highlighted objects identifier **25** identifies the objects at the second end of link **20** for completing list **30'**. As described above, the respective object storage unit **15** at the second node maintains the data pertinent to network device **ND2-P5** at the Toronto node **ND2.** For this example, these are port **ND2-P5-1-1-1** in domain **53'** with the ports of card **ND2-P5-1-2,** card **ND2-P5-1-2** from the domain **52'** with the cards of shelf **ND2-P5-1**and shelf **ND2-P5-1** from the domain **51'** with the shelves of the second network device **ND2.** The last items on list **30'** are the second network device **ND-2P2** and the second node **ND2.** As before, arrows **f, g, h** and **i** indicate how the collection of the data proceeds at network device ND2.

## Claims

1. A method of displaying highlighted objects information on a graphical user interface (GUI), comprising:
a) highlighting a primary object *O(n)* displayed on a GUI window at a selected hierarchically level (n);
b) identifying a highlighted object *O(n-1)* subtended by said primary object at a hierarchically next lower level *(n-1)*;
c) selecting said highlighted object *O(n-1)* from an object storage means and placing same in a list of highlighted objects; and
d) repeating steps b) and c) for all *n* available hierarchical levels until all highlighted objects corresponding to said primary object are identified and placed in said list.

2. The method of claim 1 further comprising: e) displaying said list in a highlighted objects window where said highlighted objects are arranged in a specified order.

3. The method of claim 2, wherein said specified order is the hierarchical order of said highlighted objects.

4. The method of claim 1, wherein said list comprises a row for each highlighted object, and a plurality of columns, each column for providing a specified attribute of said highlighted object.

5. The method of claim 4, wherein said specified attributes are the specification of said highlighted object and the name of said highlighted object.

6. The method of claim 2, wherein said highlighted objects window displays a column for an icon visually identifying said highlighted object.

7. The method of claim 2, wherein said highlighted objects window displays an object status column for defining the current status of said highlighted object.

8. The system of claim 2, wherein said highlighted objects window displays a count column for counting the number of said highlighted objects in said list.

9. The system of claim 4, wherein said GUI selects said specified order by sorting the objects in said list by any of said columns.

10. A highlighted objects window system for a graphical user interface (GUI) of the type provided with highlighting capabilities and adapted to transmit commands and display information with a view to enable management of a communication network, said system comprising:
means for identifying all highlighted objects in a highlighted hierarchy corresponding to a primary object highlighted on said GUI; and
means for selecting only said highlighted objects from an object storage means and placing said objects in a list,
wherein said GUI displays said list in a highlighted objects window where said highlighted objects are arranged in a specified order.

11. The system of claim 10, wherein said list comprises a row for each highlighted object, and a plurality of columns, each column for providing a specific attribute of said highlighted object.

12. The system of claim 10, wherein said GUI selects said specified order by sorting said list by any of said columns.

13. The system of claim 12, wherein said list includes a column for an icon visually identifying said highlighted object, a column with the specification of said highlighted object and a column with the name of said highlighted object.

14. The system of claim 13, wherein said list further comprises an object status column for defining the current status of said highlighted objects.

15. The system of claim 13, wherein said list further comprises a count column for counting the number of said highlighted objects in said list.

16. The system of claim 10, wherein said object storage means comprises an object library for maintaining data pertinent to all objects present at a respective network node.

17. The system of claim 10, wherein said object storage means comprises a connectivity database for maintaining routing data pertinent to all routes currently involving a respective network node.

18. The system of claim 10, wherein said highlighted objects window comprises a refresh button for updating said list.

19. A method of using a graphical user interface (GUI) of the type provided with highlighting capabilities and adapted to transmit commands and display information with a view to enable management of a communication network, comprising:
a) highlighting an original object on a GUI window displaying managed objects at a selected hierarchically level;
b) identifying all highlighted objects corresponding to said original object in all hierarchical levels subtended from said selected hierarchically level;
c) selecting all said highlighted objects from an object storage means and placing same in a list in a specified order; and
d) displaying said list as a highlighted objects window for providing an automatic way to obtain information on a hierarchical chain of objects in said network.

20. The method of claim 19, wherein said specified order is the hierarchical order of the objects.
